# EUROPÄISCHE PATENTSCHRIFT

(11) **EP 3 392 067 B1**
(45) Veröffentlichungstag und Bekanntmachung des Hinweises auf die Patenterteilung: **12.02.2020**
(21) Anmeldenummer: 18159626.3
(22) Anmeldetag: 02.03.2018
(51) Int. Cl.: B60D 1/173, B60D 1/34, B60D 1/48, B62D 53/00, B60D 1/00

(54) **KOPPLUNGSEINRICHTUNG EINES ROUTENZUGS**
COUPLING DEVICE OF A ROUTE TRAIN
DISPOSITIF DE COUPLAGE D'UN TRAIN DE TRANSPORT

(30) Priorität: 08.03.2017 DE 102017104811
(43) Veröffentlichungstag der Anmeldung: 24.10.2018
(73) Patentinhaber: LR Intralogistik GmbH, 84109 Wörth a. d. Isar (DE)
(72) Erfinder: BERGHAMMER, Fritz, 84028 Landshut (DE)
(74) Vertreter: Patentship Patentanwaltsgesellschaft mbH

(56) Entgegenhaltungen:
- FR-A- 363 084
- US-A- 1 020 393
- US-A- 4 002 352

## Beschreibung

Die Erfindung betrifft eine Kopplungseinrichtung eines Routenzugs, die einen Routenzuganhänger des Routenzugs mit einem Zugfahrzeug des Routenzugs oder zwei Routenzuganhänger des Routenzugs miteinander koppelt, wobei die Kopplungseinrichtung von zumindest zwei sich kreuzenden Deichsellenkern gebildet ist, wobei die Kopplungseinrichtung mit einer Rasteinrichtung versehen ist, die in der Geradeausfahrtstellung der Deichsellenker die sich kreuzenden Deichsellenker gegeneinander arretiert.

Für den innerbetrieblichen Transport von Lasten, beispielsweise im Produktionsbereich von Produktionsbetrieben, kommen zunehmend Routenzüge zum Einsatz, die aus einem Zugfahrzeug, beispielsweise einem Schlepper, und einer Mehrzahl von Routenzuganhängern bestehen, auf den die Lasten transportiert werden.

Um die Routenzuganhänger mit dem Zugfahrzeug und untereinander zu verbinden, ist es bekannt, Deichseln zu verwenden. Derartige Deichseln haben jedoch als Nachteil, dass sich die Länge des Routenzugs vergrößert.

Um einen Routenzug mit kurzer Länge zur Verfügung zu stellen, ist es bereits bekannt, als Kopplungseinrichtung, die einen Routenzuganhänger des Routenzugs mit einem Zugfahrzeug des Routenzugs oder zwei Routenzuganhänger des Routenzugs miteinander koppelt, von zumindest zwei sich kreuzenden Deichsellenkern zu bilden. Eine derartige Kopplungseinrichtung eines Routenzugs, die aus zumindest zwei sich kreuzenden Deichsellenkern gebildet ist und auch als Scherenkupplung bezeichnet wird, ist beispielswiese aus der US 4 127 202, der DE 10 2011 106 842 A1 oder der DE 10 2014 004 681 A1 bekannt. Ein Routenzug mit derartigen Kopplungseinrichtungen weist jedoch den Nachteil auf, dass die Routenzuganhänger in einer Geradeausfahrtstellung des Routenzugs bereits bei geringen Fahrgeschwindigkeiten zum Schlingern neigen.

Aus der FR 363 084 A ist eine als Scherenkupplung mit zwei sich kreuzenden Deichsellenkern ausgebildete Kopplungseinrichtung zwischen zwei Wagen bekannt, bei der Federn an den Deichsellenkern das Schlingern in der Geradeausfahrtstellung verhindern.

Die US 1 020 393 A offenbart eine gattungsgemäße als Scherenkupplung mit zwei sich kreuzenden Deichsellenkern ausgebildete Kopplungseinrichtung zwischen zwei Fahrzeugen. Mit den beiden Deichsellenkern sind Hülsen und in die Hülsen einschiebbare Raststangen verbunden. An den Hülsen angeordnete Rasthaken können in die Verzahnung der Raststangen eingreifen und dadurch die Deichsellenker in der Geradeausfahrtstellung verriegeln und gegeneinander arretieren.

Der vorliegenden Erfindung liegt die Aufgabe zugrunde, eine Kopplungseinrichtung eines Routenzugs der eingangs genannten Gattung zur Verfügung zu stellen, mit der bei geringem Bauaufwand ein Schlingern der Routenzuganhänger des Routenzugs in einer Geradeausfahrtstellung verringert wird.

Diese Aufgabe wird erfindungsgemäß dadurch gelöst, dass die Rasteinrichtung in der Geradeausfahrtstellung der Deichsellenker im Kreuzungspunkt der Deichsellenker angeordnet. Mit einer erfindungsgemäßen Rasteinrichtung werden die sich kreuzenden Deichsellenker der Kopplungseinrichtung in der Geradeausfahrtstellung der Deichsellenker und somit des Routenzugs gegeneinander arretiert, wodurch ein Einrasten der von den Deichsellenkern gebildeten Schere in der Geradeausfahrtstellung erzielt wird. Mit der erfindungsgemäßen Rasteinrichtung kann mit geringem Bauaufwand ein Schlingern der Routenzuganhänger in der Geradeausfahrtstellung verringert werden und dadurch der Routenzug mit höheren Fahrgeschwindigkeiten betrieben werden. Erfindungsgemäß ist die Rasteinrichtung in der Geradeausfahrtstellung der Deichsellenker im Kreuzungspunkt der Deichsellenker angeordnet. Dies ermöglicht es in besonders vorteilhafter Weise, ein Schlingern der Routenzuganhänger zu verringern.

Gemäß einer vorteilhaften Ausführungsform der Erfindung ist die Rasteinrichtung mittels einer Federeinrichtung in eine Arretierstellung beaufschlagt, in der die sich kreuzenden Deichsellenker gegeneinander arretiert sind. Mit einer Federeinrichtung kann die Rasteinrichtung auf einfache Weise in der Geradeausfahrtstellung der Deichsellenker in die Arretierstellung betätigt werden, um die Deichsellenker gegeneinander zu arretieren.

Besondere Vorteile ergeben sich, wenn gemäß einer vorteilhaften Weiterbildung der Erfindung die Rasteinrichtung in einer Kurvenfahrt des Routenzugs durch die Bewegung der Deichsellenker zueinander in eine Lösestellung betätigbar ist. Die Rasteinrichtung wird somit bei einer Kurvenfahrt, wobei eine Relativbewegung der Deichsellenker zueinander auftritt, durch die auftretende Bewegung der Deichsellenker automatisch in eine Lösestellung betätigt. Für das Lösen der Rasteinrichtung ist somit kein zusätzlicher Aktuator erforderlich.

Die Rasteinrichtung ist gemäß einer vorteilhaften Ausgestaltungsform der Erfindung als ein mit einer Rastausnehmung zusammenwirkendes Rastelement ausgebildet. Eine Rasteinrichtung, die aus einer Rastausnehmung und einem Rastelement gebildet ist, die in die Rastausnehmung in der Arretierstellung einrastet, weist einen einfachen und kostengünstigen Aufbau auf.

Das Rastelement kann gemäß einer vorteilhaften Ausgestaltungsform der Erfindung als Bolzen oder als Kugel ausgebildet sein.

Die Rastausnehmung kann direkt in einem Deichsellenker ausgebildet sein. Vorteile hinsichtlich einer einfachen Herstellung ergeben sich, wenn gemäß einer bevorzugten Ausführungsform der Erfindung die Rastausnehmung in einem an einem Deichsellenker angeordneten Halter ausgebildet ist.

Gemäß einer vorteilhaften Weiterbildung der Erfindung ist der Halter angrenzend an die Rastausnehmung mit Betätigungsschrägen versehen, die mit dem Rastelement zusammenwirken. Hierdurch kann auf einfache Weise bei einem Zurückbewegen der Deichsellenker von einer Kurvenfahrt in die Geradeausfahrtstellung erzielt werden, dass das Rastelement durch Zusammenwirken mit den Betätigungsschrägen in die Rastausnehmung geführt wird.

Vorteilhafterweise ist das Rastelement in einem bolzenartigen Halter längsverschiebbar angeordnet, der an einem Deichsellenker befestigt ist. Hierdurch kann das Rastelement auf einfache Weise an einem Deichsellenker angeordnet werden.

Gemäß einer Weiterbildung der Erfindung ist der bolzenartige Halter oder der mit der Rastausnehmung versehene Halter mittels einer Einstellvorrichtung einstellbar an dem Deichsellenker angeordnet. Dies ermöglicht es, das Rastelement oder die Rastausnehmung insbesonders in vertikaler Richtung einzustellen, um die Arretierstellung einzustellen und anzupassen.

Eine derartige Einstellvorrichtung und Einstellbarkeit in vertikaler Richtung kann mit geringem Bauaufwand erzielt werden, wenn der bolzenartige Halter als Einstellschraube ausgebildet ist, der an dem Deichsellenker in vertikaler Richtung einstellbar angeordnet ist.

Die Kopplungseinrichtung kann gemäß einer Ausführungsform der Erfindung aus zwei sich kreuzenden Deichsellenkern bestehen, die in vertikaler Richtung voneinander beabstandet angeordnet sind, wobei die Rasteinrichtung zwischen den beiden sich kreuzenden Deichsellenkern angeordnet ist. Bei einer Kopplungseinrichtung mit zwei sich kreuzenden Deichsellenkern kann mit einer Rasteinrichtung, die zwischen den beiden sich kreuzenden Deichsellenkern angeordnet ist, auf einfache Weise eine Arretierung der beiden Deichsellenker in der Geradeausfahrtstellung erzielt werden.

Die Kopplungseinrichtung kann gemäß einer alternativen Ausführungsform der Erfindung aus drei sich kreuzenden Deichsellenkern bestehen, die in vertikaler Richtung voneinander beabstandet angeordnet sind, wobei jeweils eine Rasteinrichtung zwischen zwei benachbart zueinander angeordneten, sich kreuzenden Deichsellenkern angeordnet ist. Bei einer Kopplungseinrichtung mit drei sich kreuzenden Deichsellenkern kann mit zwei Rasteinrichtungen, die jeweils zwischen zwei sich kreuzenden Deichsellenkern angeordnet ist, auf einfache Weise eine Arretierung der drei Deichsellenker in der Geradeausfahrtstellung erzielt werden.

Weitere Vorteile und Einzelheiten der Erfindung werden anhand des in den schematischen Figuren dargestellten Ausführungsbeispiels näher erläutert. Hierbei zeigt
- Figur 1: einen Routenzug mit einer erfindungsgemäßen Kopplungseinrichtung,
- Figur 2: eine erfindungsgemäße Kopplungseinrichtung in einer perspektivischen Darstellung,
- Figur 3: die erfindungsgemäße Kopplungseinrichtung der Figur 2 in einer Draufsicht,
- Figur 4: die erfindungsgemäße Kopplungseinrichtung der Figur 2 in einer Vorderansicht und
- Figur 5: einen Längsschnitt durch die erfindungsgemäße Kopplungseinrichtung gemäß Linie A-A der Figur 2.

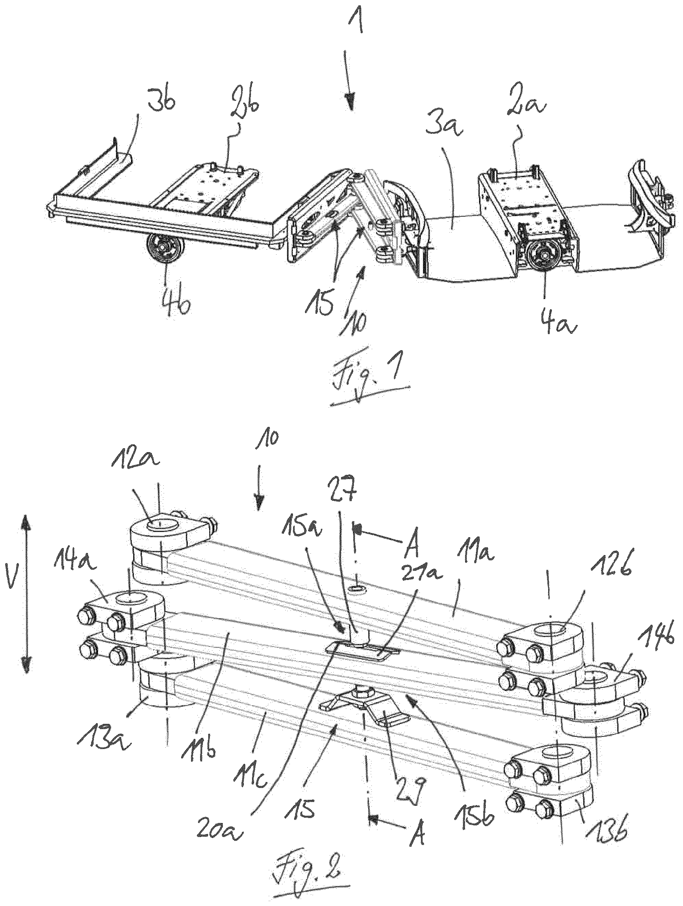

In der Figur 1 ist ein Routenzug 1 mit zwei Routenzuganhängern 2a, 2b in einer perspektivischen Darstellung während einer Kurvenfahrt dargestellt.

Die beiden Routenzuganhänger 2a, 2b weisen jeweils einen Tragrahmen 3a, 3b auf, der an einem Fahrwerk 4a, 4b über eine nicht näher dargestellte Hubvorrichtung gegenüber einer Fahrbahnoberfläche anhebbar und absenkbar abgestützt ist. Die Fahrwerke 4a, 4b sind jeweils von einer Starrachse mit nicht-gelenkten Rädern gebildet. Die Fahrwerke 4a, 4b sind in Längsrichtung der Routenzuganhänger 2a, 2b jeweils im Wesentlichen mittig angeordnet.

Die beiden Routenzuganhänger 2a, 2b sind mittels einer erfindungsgemäßen Kopplungseinrichtung 10 miteinander verbunden. Die Kopplungseinrichtung 10 ist - wie in den Figuren 2 bis 5 näher dargestellt ist - von zumindest zwei, im dargestellten Ausführungsbeispiel von drei, sich kreuzenden Deichsellenkern 11a, 11b, 11c gebildet ist.

Die Deichsellenker 11a, 11b, 11c weisen jeweils dieselbe Länge auf und sind jeweils mit einem Ende mittels eines Befestigungspunktes an dem vorderen Routenzuganhänger 2a und an dem hinteren Routenzuganhänger 2b gelenkig befestigt.

Die drei sich kreuzende Deichsellenker 11a, 11b, 11c sind in vertikaler Richtung V voneinander beabstandet angeordnet.

Der obere Deichsellenker 11a und der untere Deichsellenker 11c sind jeweils an dem in der Figur 2 linken Ende mittels eines Befestigungspunktes 12a, 13a an dem vorderen Routenzuganhänger 2a gelenkig befestigt und an dem in der Figur 2 rechten Ende mittels eines Befestigungspunktes 12b, 13b an dem hinteren Routenzuganhänger 2b gelenkig befestigt. Der mittlere, zwischen den Deichsellenkern 11a, 11c angeordnete Deichsellenker 11b ist an dem in der Figur 2 linken Ende mittels eines Befestigungspunktes 14a an dem hinteren Routenzuganhänger 2b gelenkig befestigt und an dem in der Figur 2 rechten Ende mittels eines Befestigungspunktes 14b an dem vorderen Routenzuganhänger 2a gelenkig befestigt. Die Befestigungspunkte 12a, 12b, 13a, 13b, 14a, 14b sind jeweils an den Ecken der Routenzuganhänger 2a, 2b angeordnet. Die Befestigungspunkte 12a, 12b, 13a, 13b, 14a, 14b ermöglichen jeweils eine Schwenkbewegung der Deichsellenker 11a, 11b, 11c um eine vertikale Schwenkachse. Die vertikalen Schwenkachsen der Befestigungspunkte 12a, 13a der Deichsellenker 11a, 11c sowie die vertikalen Schwenkachsen der Befestigungspunkte 12b, 13b der Deichsellenker 11a, 11c fluchten jeweils zueinander.

In den Figuren 2 bis 5 ist die von den Deichsellenker 11a, 11b, 11c gebildete Kopplungseinrichtung 10 in der Geradeausfahrtstellung dargestellt.

Erfindungsgemäß ist die Kopplungseinrichtung 10 mit einer Rasteinrichtung 15 versehen, die in der Geradeausfahrtstellung der Deichsellenker 11a, 11b, 11c die sich kreuzenden Deichsellenker 11a, 11b, 11c gegeneinander arretiert.

Im dargestellten Ausführungsbeispiel mit drei sich kreuzende Deichsellenker 11a, 11b, 11c, die in vertikaler Richtung V voneinander beabstandet angeordnet sind, ist jeweils eine Rasteinrichtung 15a, 15b zwischen zwei benachbart zueinander angeordneten, sich kreuzenden Deichsellenkern 11a, 11b und 11b, 11c angeordnet ist. Eine erste Rasteinrichtung 15a ist zwischen dem oberen Deichsellenker 11a und dem mittleren Deichsellenker 11b angeordnet und arretiert die Deichsellenker 11a, 11b in der Geradeausfahrtstellung gegeneinander. Eine zweite Rasteinrichtung 15a ist zwischen dem mittleren Deichsellenker 11b und dem unteren Deichsellenker 11c angeordnet und arretiert die Deichsellenker 11b, 11c in der Geradeausfahrtstellung gegeneinander.

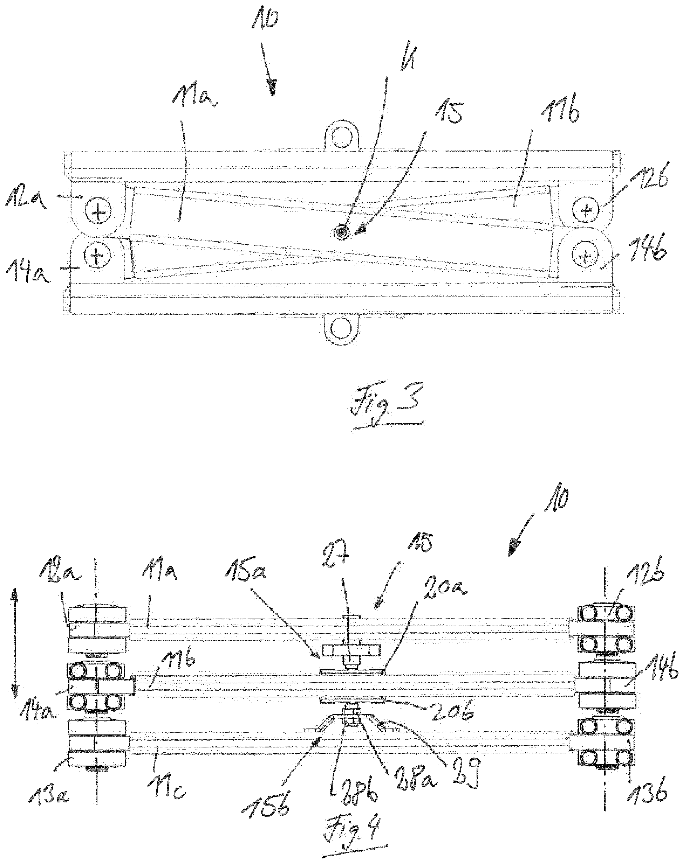

Die Rasteinrichtung 15, 15a, 15b ist - wie insbesondere aus der Figur 3 ersichtlich ist - in der Geradeausfahrtstellung der Deichsellenker 11a, 11b, 11c im Kreuzungspunkt K und somit im Schnittpunkt der Deichsellenker 11a, 11b bzw. 11b, 11c angeordnet. Die Kreuzungspunkte K und somit die Schnittpunkte der Deichsellenker 11a, 11b bzw. 11b, 11c bilden jeweils den Momentanpol der Deichsellenker 11a, 11b bzw. 11b, 11c.

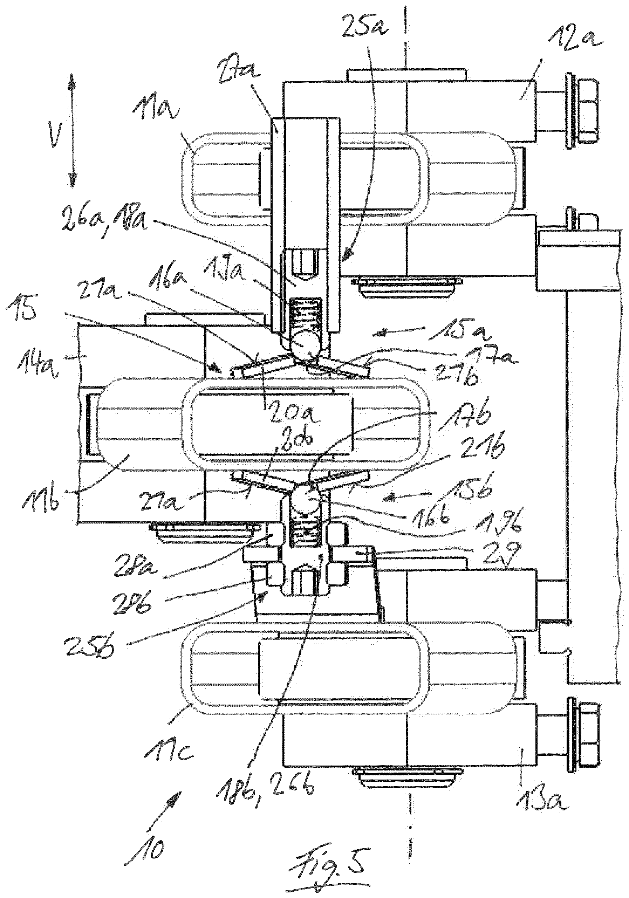

Die Rasteinrichtungen 15a, 15b sind jeweils - wie insbesondere aus dem Längsschnitt der Figur 5 ersichtlich ist - als ein mit einer Rastausnehmung 17a, 17b zusammenwirkendes Rastelement 16a, 16b ausgebildet. In der Figur 5 sind die Rasteinrichtungen 15a, 15b in einer Arretierstellung dargestellt, in der die Rastelement 16a, 16b in die Rastausnehmung 17a, 17b eingreifen.

Das Rastelement 16a, 16b ist in dem dargestellten Ausführungsbeispiel jeweils als Kugel ausgebildet.

Das Rastelement 16a ist in einem bolzenartigen Halter 18a längsverschiebbar, d.h. in vertikaler Richtung V verschiebbar, angeordnet. Das Rastelement 16a ist von einer Federeinrichtung 19a, beispielsweise einer Druckfeder, nach in der Figur 5 unten in die Arretierstellung beaufschlagt. Der Halter 18a ist im dargestellten Ausführungsbeispiel an der Unterseite des oberen Deichsellenkers 11a angeordnet.

Das Rastelement 16b ist in einem bolzenartigen Halter 18b längsverschiebbar, d.h. in vertikaler Richtung V verschiebbar, angeordnet. Das Rastelement 16ba ist von einer Federeinrichtung 19b, beispielsweise einer Druckfeder, nach in der Figur 5 oben in die Arretierstellung beaufschlagt. Der Halter 18b ist im dargestellten Ausführungsbeispiel an der Oberseite des unteren Deichsellenkers 11c angeordnet.

Die Rastausnehmung 17a, die mit dem Rastelement 16a zusammenwirkt und in die das Rastelement 16a in der Arretierstellung eingreift, ist in einem Halter 20a ausgebildet. Der Halter 20a ist im dargestellten Ausführungsbeispiel an der Oberseite des mittleren Deichsellenkers 11b angeordnet.

Die Rastausnehmung 17b, die mit dem Rastelement 16b zusammenwirkt und in die das Rastelement 16b in der Arretierstellung eingreift, ist in einem Halter 20b ausgebildet. Der Halter 20b ist im dargestellten Ausführungsbeispiel an der Unterseite des mittleren Deichsellenkers 11b angeordnet.

Die Rastausnehmung 17a, 17b ist bevorzugt jeweils von einer bohrungsförmigen oder langlochartigen Ausnehmung in dem Halter 20a, 20b gebildet.

Der Halter 20a, 20b ist jeweils angrenzend an die Rastausnehmung 17a, 17b mit Betätigungsschrägen 21a, 21b versehen, die mit dem Rastelement 16a, 16b zusammenwirken.

Der bolzenartige Halter 18a, 18b ist in dem dargestellten Ausführungsbeispiel jeweils mittels einer Einstellvorrichtung 25a, 25b einstellbar an dem Deichsellenker 11a bzw. 11c angeordnet.

Der bolzenartige Halter 18a, 18b ist hierzu jeweils als Einstellschraube 26a, 26b ausgebildet, der an dem entsprechenden Deichsellenker 11a, 11c in vertikaler Richtung V einstellbar angeordnet ist.

Der Halter 18a ist hierzu mit einem Außengewinde versehen, der in ein Innengewinde einer Gewindehülse 27 eingeschraubt ist, die an dem Deichsellenker 11a befestigt ist.

Der Halter 18b ist hierzu ebenfalls mit einem Außengewinde versehen, an dem zwei Befestigungsmuttern 28a, 28b aufgeschraubt sind. Zwischen den beiden Befestigungsmuttern 28a, 28b ist eine Haltevorrichtung 29 angeordnet, die an dem Deichsellenker 11c befestigt ist. Über die beiden Befestigungsmuttern 28a, 28b kann somit der Halter 18b in vertikaler Richtung bezüglich der Haltevorrichtung 29 verstellt werden.

Wie sich aus der Figur 5 ergibt, ist die Rasteinrichtung 15a mittels der Federeinrichtung 19a in die Arretierstellung beaufschlagt, in der in der Geradeausfahrtstellung die sich kreuzenden Deichsellenker 11a, 11b gegeneinander arretiert und somit verriegelt sind. Entsprechend ist die Rasteinrichtung 15b mittels der Federeinrichtung 19b in die Arretierstellung beaufschlagt, in der in der Geradeausfahrtstellung die sich kreuzenden Deichsellenker 11b, 11c gegeneinander arretiert und somit verriegelt sind.

Zu Beginn einer Kurvenfahrt des Routenzugs 1 wird die Rasteinrichtung 15a, 15b durch die bei der Kurvenfahrt stattfindende Bewegung der Deichsellenker 11a, 11b, 11c zueinander in eine Lösestellung betätigt. Die Rastelemente 16a, 16b werden zu Beginn einer Kurvenfahrt des Routenzugs 1 und einer entsprechenden Bewegung der Deichsellenker 11a, 11b, 11c zueinander von den Kanten der Rastausnehmung 17a, 17b entgegen der Kraft der Federeinrichtung 19a, 19b betätigt, um die Rasteinrichtung 15a, 15b in die Lösestellung zu betätigen.

Gehen nach einer Kurvenfahrt die Deichsellenker 11a, 11b, 11c wieder zurück in die Geradeausfahrtstellung gelangen die Rastelemente 15a, 15b in Anlage an die Betätigungsschrägen 21a bzw. 21b und werden entgegen der Kraft der Federeinrichtung 19a, 19b betätigt, um die Rastelemente 15a, 15b sanft in die Rastausnehmungen 17a, 17b zu führen.

Mit der erfindungsgemäßen Rasteinrichtung 15 werden somit die sich kreuzenden Deichsellenker 11a, 11b, 11b in der Geradeausfahrtstellung gegeneinander arretiert und verriegelt. Mit der erfindungsgemäßen Rasteinrichtung 15 kann mit geringem Bauaufwand ein Schlingern der Routenzuganhänger 2a, 2b in der Geradeausfahrtstellung verringert werden und dadurch der Routenzug 1 mit höheren Fahrgeschwindigkeiten betrieben werden.

Die erfindungsgemäße Rasteinrichtung 15 weist einen einfachen Aufbau auf, da diese von einfachen Bauelementen gebildet ist. Durch die Federeinrichtungen 19a, 19b erfolgt das Einrasten und somit das Arretieren der von den Deichsellenkern 11a, 11b, 11c gebildeten Schere in der Geradeausfahrtstellung mittels der Rasteinrichtung 15 automatisch. Auch das Lösen der Rasteinrichtung 15 zu Beginn einer Kurvenfahrt erfolgt automatisch und ohne zusätzlichen anzusteuernden Aktuator für die Rastelemente 18a, 18b. Dies vereinfacht den Bauaufwand der Rasteinrichtung 15 weiter.

Die Erfindung ist nicht auf das dargestellte Ausführungsbeispiel mit drei Deichsellenkern 11a, 11b, 11c beschränkt. Die Kopplungseinrichtung 10 kann alternativ nur zwei Deichsellenker 11a, 11b aufweisen, die mittels einer einzigen Rasteinrichtung 15a in der Geradeausfahrtstellung arretiert sind.

Alternativ zu der dargestellten Anordnung des mit dem Rastelement 16a versehenen Halters 18a an dem oberen Deichsellenker 11a und des mit der Rastausnehmung 17a versehenen Halters 20a an dem mittleren Deichsellenker 11b kann der mit dem Rastelement 16a versehenen Halter 18a an dem mittleren Deichsellenker 11b und der mit der Rastausnehmung 17a versehenen Halter 20a an dem oberen Deichsellenker 11a angeordnet werden.

Entsprechend kann alternativ zu der dargestellten Anordnung des mit dem Rastelement 16b versehenen Halters 18b an dem unteren Deichsellenker 11c und des mit der Rastausnehmung 17b versehenen Halters 20b an dem mittleren Deichsellenker 11b der mit dem Rastelement 16b versehenen Halter 18b an dem mittleren Deichsellenker 11b und der mit der Rastausnehmung 17b versehenen Halter 20b an dem unteren Deichsellenker 11c angeordnet werden.

## Patentansprüche

1. Kopplungseinrichtung (10) eines Routenzugs (1), die einen Routenzuganhänger (2a) des Routenzugs mit einem Zugfahrzeug des Routenzugs oder zwei Routenzuganhänger (2a, 2b) des Routenzugs (1) miteinander koppelt, wobei die Kopplungseinrichtung (10) von zumindest zwei sich kreuzenden Deichsellenkern (11a, 11b; 11c) gebildet ist, wobei die Kopplungseinrichtung (10) mit einer Rasteinrichtung (15; 15a, 15b) versehen ist, die in der Geradeausfahrtstellung der Deichsellenker (11a, 11b; 11c) die sich kreuzenden Deichsellenker (11a; 11b; 11c) gegeneinander arretiert, **dadurch gekennzeichnet, dass** die Rasteinrichtung (15; 15a, 15b) in der Geradeausfahrtstellung der Deichsellenker (11a, 11b; 11c) im Kreuzungspunkt (K) der Deichsellenker (11a, 11b; 11c) angeordnet ist.

2. Kopplungseinrichtung nach Anspruch 1, **dadurch gekennzeichnet, dass** die Rasteinrichtung (15; 15a, 15b) mittels einer Federeinrichtung (19a; 19b) in eine Arretierstellung beaufschlagt ist, in der die sich kreuzenden Deichsellenker (11a, 11b; 11c) gegeneinander arretiert sind.

3. Kopplungseinrichtung nach Anspruch 1 oder 2, **dadurch gekennzeichnet, dass** die Rasteinrichtung (15; 15a, 15b) in einer Kurvenfahrt des Routenzugs durch die Bewegung der Deichsellenker (11a, 11b; 11c) zueinander in eine Lösestellung betätigbar ist.

4. Kopplungseinrichtung nach einem der Ansprüche 1 bis 3, **dadurch gekennzeichnet, dass** die Rasteinrichtung (15; 15a, 15b) als ein mit einer Rastausnehmung (17a; 17b) zusammenwirkendes Rastelement (16a; 16b) ausgebildet ist.

5. Kopplungseinrichtung nach Anspruch 4, **dadurch gekennzeichnet, dass** das Rastelement (16a; 16b) als Bolzen oder als Kugel ausgebildet ist.

6. Kopplungseinrichtung nach Anspruch 4 oder 5, **dadurch gekennzeichnet, dass** die Rastausnehmung (17a; 17b) in einem an einem Deichsellenker (11a; 11b; 11c) angeordneten Halter (20a; 20b) ausgebildet ist.

7. Kopplungseinrichtung nach Anspruch 6, **dadurch gekennzeichnet, dass** der Halter (20a; 20b) angrenzend an die Rastausnehmung (17a; 17b) mit Betätigungsschrägen (21a, 21b) versehen ist, die mit dem Rastelement (16a; 16b) zusammenwirken.

8. Kopplungseinrichtung nach einem der Ansprüche 4 bis 7, **dadurch gekennzeichnet, dass** das Rastelement (16a; 16b) in einem bolzenartigen Halter (18a; 18b) längsverschiebbar angeordnet ist, der an einem Deichsellenker (11a; 11b; 11c) befestigt ist.

9. Kopplungseinrichtung nach einem der Ansprüche 6 bis 8, **dadurch gekennzeichnet, dass** der bolzenartige Halter (18a; 18b) oder der mit der Rastausnehmung (17a, 17b) versehene Halter (20a; 20b) mittels einer Einstellvorrichtung (25a; 25b) einstellbar an dem Deichsellenker (11a; 11b; 11c) angeordnet ist.

10. Kopplungseinrichtung nach Anspruch 9, **dadurch gekennzeichnet, dass** der bolzenartige Halter (18a; 18b) als Einstellschraube (26a; 26b) ausgebildet ist, der an dem Deichsellenker (11a; 11b; 11c) in vertikaler Richtung (V) einstellbar angeordnet ist.

11. Kopplungseinrichtung nach einem der Ansprüche 1 bis 10, **dadurch gekennzeichnet, dass** die Kopplungseinrichtung (10) aus zwei sich kreuzenden Deichsellenkern (11a, 11b) besteht, die in vertikaler Richtung (V) voneinander beabstandet angeordnet sind, wobei die Rasteinrichtung (15) zwischen den beiden sich kreuzenden Deichsellenkern (11a, 11b) angeordnet ist.

12. Kopplungseinrichtung nach einem der Ansprüche 1 bis 10, **dadurch gekennzeichnet, dass** die Kopplungseinrichtung (10) aus drei sich kreuzenden Deichsellenkern (11a, 11b, 11c) besteht, die in vertikaler Richtung (V) voneinander beabstandet angeordnet sind, wobei jeweils eine Rasteinrichtung (15a, 15b) zwischen zwei benachbart zueinander angeordneten, sich kreuzenden Deichsellenkern (11a, 11b; 11b, 11c) angeordnet ist.

## Claims

1. Coupling device (10) of a tugger train (1), which coupling device (10) couples a tugger train trailer (2a) of the tugger train to a traction vehicle of the tugger train or couples two tugger train trailers (2a, 2b) of the tugger train (1) to one another, wherein the coupling device (10) is formed by at least two crossing drawbar links (11a, 11b; 11c), wherein the coupling device (10) is provided with a latching device (15; 15a, 15b) which, in the straight ahead driving position of the drawbar links (11a, 11b; 11c), locks the crossing drawbar links (11a; 11b; 11c) against one another, **characterized in that** the latching device (15; 15a, 15b) is arranged at the crossing point (K) of the drawbar links (11a, 11b; 11c) in the straight ahead driving position of the drawbar links (11a, 11b; 11c).

2. Coupling device according to Claim 1, **characterized in that** the latching device (15; 15a, 15b) is loaded by means of a spring device (19a; 19b) into a locked position, in which the crossing drawbar links (11a, 11b; 11c) are locked against one another.

3. Coupling device according to Claim 1 or 2, **characterized in that** the latching device (15; 15a, 15b) can be actuated into a release position by way of the movement of the drawbar links (11a, 11b; 11c) with respect to one another when the tugger train is driving around a bend.

4. Coupling device according to one of Claims 1 to 3, **characterized in that** the latching device (15; 15a, 15b) is configured as a latching element (16a; 16b) which interacts with a latching recess (17a; 17b).

5. Coupling device according to Claim 4, **characterized in that** the latching element (16a; 16b) is configured as a pin or as a ball.

6. Coupling device according to Claim 4 or 5, **characterized in that** the latching recess (17a; 17b) is configured in a holder (20a; 20b) which is arranged on a drawbar link (11a; 11b; 11c).

7. Coupling device according to Claim 6, **characterized in that**, in a manner which adjoins the latching recess (17a; 17b), the holder (20a; 20b) is provided with actuating bevels (21a, 21b) which interact with the latching element (16a; 16b).

8. Coupling device according to one of Claims 4 to 7, **characterized in that** the latching element (16a; 16b) is arranged such that it can be displaced longitudinally in a pin-like holder (18a; 18b) which is fastened to a drawbar link (11a; 11b; 11c).

9. Coupling device according to one of Claims 6 to 8, **characterized in that** the pin-like holder (18a; 18b) or the holder (20a; 20b) which is provided with the latching recess (17a, 17b) is arranged on the drawbar link (11a; 11b; 11c) such that it can be adjusted by means of an adjusting apparatus (25a; 25b).

10. Coupling device according to Claim 9, **characterized in that** the pin-like holder (18a; 18b) is configured as an adjusting screw (26a; 26b) which is arranged on the drawbar link (11a; 11b; 11c) such that it can be adjusted in the vertical direction (V).

11. Coupling device according to one of Claims 1 to 10, **characterized in that** the coupling device (10) consists of two crossing drawbar links (11a, 11b) which are arranged spaced apart from one another in the vertical direction (V), wherein the latching device (15) is arranged between the two crossing drawbar links (11a, 11b).

12. Coupling device according to one of Claims 1 to 10, **characterized in that** the coupling device (10) consists of three crossing drawbar links (11a, 11b, 11c) which are arranged spaced apart from one another in the vertical direction (V), wherein in each case one latching device (15a, 15b) is arranged between two crossing drawbar links (11a, 11b; 11b, 11c) which are arranged adjacently with respect to one another.

## Revendications

1. Dispositif d'accouplement (10) d'un train routier (1), lequel dispositif accouple une remorque (2a) du train routier à un véhicule tracteur du train routier ou à deux remorques (2a, 2b) du train routier (1), le dispositif d'accouplement (10) étant formé par au moins deux bras de timon entrecroisés (11a, 11b ; 11c), le dispositif d'accouplement (10) étant pourvu d'un dispositif d'encliquetage (15 ; 15a, 15b) qui, dans la position rectiligne des bras de timon (11a, 11b ; 11c), bloque les bras de timon entrecroisés (11a ; 11b ; 11c) l'un par rapport à l'autre, **caractérisé en ce que**, dans la position rectiligne des bras de timon (11a, 11b ; 11c), le dispositif d'encliquetage (15 ; 15a, 15b) est disposé au point de croisement (K) des bras de timon (11a, 11b ; 11c).

2. Dispositif d'accouplement selon la revendication 1, **caractérisé en ce que** le dispositif d'encliquetage (15 ; 15a, 15b) est amené au moyen d'un dispositif à ressort (19a ; 19b) dans une position de blocage dans laquelle les bras de timon entrecroisés (11a, 11b ; 11c) sont bloqués l'un par rapport à l'autre.

3. Dispositif d'accouplement selon la revendication 1 ou 2, **caractérisé en ce que**, dans un virage du train routier, le dispositif d'encliquetage (15 ; 15a, 15b) peut être actionné dans une position de libération par le mouvement des bras de timon (11a, 11b ; 11c) l'un vers l'autre.

4. Dispositif d'accouplement selon l'une des revendications 1 à 3, **caractérisé en ce que** le dispositif d'encliquetage (15 ; 15a, 15b) est conçu comme un élément d'encliquetage (16a ; 16b) coopérant avec un évidement d'encliquetage (17a ; 17b).

5. Dispositif d'accouplement selon la revendication 4, **caractérisé en ce que** l'élément d'encliquetage (16a ; 16b) est conçu comme un boulon ou une sphère.

6. Dispositif d'accouplement selon la revendication 4 ou 5, **caractérisé en ce que** l'évidement d'encliquetage (17a ; 17b) est ménagé dans un support (20a ; 20b) disposé au niveau d'un bras de timon (11a ; 11b ; 11c).

7. Dispositif d'accouplement selon la revendication 6, **caractérisé en ce que** le support (20a ; 20b) est pourvu, de manière adjacente à l'évidement d'encliquetage (17a ; 17b), de biseaux d'actionnement (21a, 21b) qui coopèrent avec l'élément d'encliquetage (16a ; 16b).

8. Dispositif d'accouplement selon l'une des revendications 4 à 7, **caractérisé en ce que** l'élément d'encliquetage (16a ; 16b) est disposé, de manière à coulisser longitudinalement, dans un support de type boulon (18a ; 18b) qui est fixé à un bras de timon (11a ; 11b ; 11c).

9. Dispositif d'accouplement selon l'une des revendications 6 à 8, **caractérisé en ce que** le support de type boulon (18a ; 18b) ou le support (20a ; 20b) pourvu de l'évidement d'encliquetage (17a, 17b) est disposé au niveau du bras de timon (11a ; 11b ; 11c) de manière réglable au moyen d'un dispositif de réglage (25a ; 25b).

10. Dispositif d'accouplement selon la revendication 9, **caractérisé en ce que** le support de type boulon (18a ; 18b) est conçu comme une vis de réglage (26a ; 26b) qui est disposée au niveau du bras de timon (11a ; 11b ; 11c) de manière réglable dans la direction verticale (V) .

11. Dispositif d'accouplement selon l'une des revendications 1 à 10, **caractérisé en ce que** le dispositif d'accouplement (10) comprend deux bras de timon entrecroisés (11a, 11b) qui sont disposés à distance l'un de l'autre dans la direction verticale (V), le dispositif d'encliquetage (15) étant disposé entre les deux bras de timon entrecroisés (11a, 11b).

12. Dispositif d'accouplement selon l'une des revendications 1 à 10, **caractérisé en ce que** le dispositif d'accouplement (10) comprend trois bras de timon entrecroisés (11a, 11b, 11c) qui sont disposés à distance les uns des autres dans la direction verticale (V), un dispositif d'encliquetage (15a, 15b) étant disposé à chaque fois entre deux bras de timon entrecroisés (11a, 11b ; 11b, 11c) disposés de manière adjacente.
